Europäisches Patentamt

European Patent Office

Office européen des brevets

(11) Publication number: **0 086 034**
**B1**

## EUROPEAN PATENT SPECIFICATION

(45) Date of publication of patent specification: **27.12.85**

(21) Application number: **83300079.7**

(22) Date of filing: **07.01.83**

(51) Int. Cl.⁴: **C 08 G 18/60,** C 09 D 3/72,
C 09 D 3/66, C 09 D 3/70,
C 09 D 5/04

(54) **Thixotropic resins, their preparation and use in coatings.**

(30) Priority: **19.01.82 GB 8201437**

(43) Date of publication of application:
**17.08.83 Bulletin 83/33**

(45) Publication of the grant of the patent:
**27.12.85 Bulletin 85/52**

(84) Designated Contracting States:
**AT BE DE FR GB IT NL SE**

(56) References cited:
**EP-A-0 035 666**
**FR-A-2 282 437**
**GB-A- 614 993**

(73) Proprietor: **IMPERIAL CHEMICAL INDUSTRIES PLC**
**Imperial Chemical House Millbank**
**London SW1P 3JF (GB)**

(72) Inventor: **Khan, Muhammed**
**268, Uxbridge Road**
**Slough Berkshire (GB)**
The other inventor has agreed to waive his
entitlement to designation

(74) Representative: **Kerr, Michael Arthur et al**
**Imperial Chemical Industries PLC Legal**
**Department : Patents PO Box 6 Bessemer Road**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the preparation of resins suitable for use in organic solvent-based coating compositions which are to have thixotropic properties, more particularly to the preparation of resins based on polyamide-modified alkyd resins by reaction with a polyisocyanate; to the resins produced; and to coating compositions which contain the resins.

It is known from European Patent Application No. 0035666 to produce thixotropic resins by first reacting certain alkyd resins with 10—20% by weight of a dimer fatty acid polyamide and then reacting the reaction product with 10—20% by weight of a diisocyanate in the presence of a defined amine, the weight being based on the total weight of the four reactants. We have found that resins which impact improved properties to coating compositions, for example in respect of their thixotropic properties at high ambient temperatures, can be produced in the absence of an amine when the proportion of a polyisocyanate employed is not greater than 9.5% by weight and the proportion of polyamide is preferably not greater than 10%.

According to the invention we provide a process of preparing a resin, suitable for use in an organic solvent-based coating composition which is to have thixotropic properties, which comprises reacting:

(a) an alkyd resin having a hydroxyl value in the range 30—200 mg KOH/g and an acid value in the range 2—25 mg KOH/g, and having been prepared by co-reacting a polyol, a polybasic acid and a co-reactive material comprising an unsaturated drying oil moiety, with

(b) a polyamide which has been obtained by co-reacting a dimer acid and a polyalkylene polyamine, and thereafter reacting the product of reacting (a) and (b) with

(c) 0.1—9.5% by weight based on the total weight of (a), (b) and (c) of a polyisocyanate the relative weight proportions of hydroxyl:isocyanate groups in the product of reacting (a) and (b) and in (c) respectively being in the range 100:5—100:50.

Preferably the final resin has a hydroxyl value of greater than 100 mg KOH/g and an acid value in the range 0—12 mg KOH/g.

Preferably the polybasic acid used in the preparation of the alkyd resin is a dibasic acid and especially isophthalic acid, i.e. m-phthalic acid. This acid is prefered over o-phthalic acid or the corresponding anhydride since it provides a product having a superior overall balance of properties in the final coating composition. However o-phthalic, terephthalic or other acids may be employed, but will generally give less desirable properties.

A preferred polyol is pentaerythritol but other suitable polyols include glycerol, trimethylolpropane and trimethylolethane. The co-reactive material comprising an unsaturated drying oil moiety may be a drying oil or a drying oil fatty acid or a partial fatty acid ester of a polyol. Examples of co-reactive materials containing a drying oil moiety include tall oil fatty acid, soya bean oil, linseed oil and mixtures of bodied soya bean oil and raw soya bean oil.

Preferably the ingredients in the preparation of the alkyd resin are co-reacted at a temperature in the range 220—260°C, more preferably in the region of 240°C. Generally the final alkyd resin will be diluted with a suitable organic solvent such as an aliphatic hydrocarbon of boiling range 140—200°C, for example white spirit. Suitable alkyd resins may be made by either the "monoglyceride (two stage) process" or by heating all of the ingredients together.

Preferably the hydroxyl value of the alkyd resin is in the range 75—150 mg KOH/g and the acid value in the range 6—16 mg KOH/g.

The polyamide is of a type well known in commerce and is commercially available in one form under the Registered Trade Mark "Versamid" and also under the Registered Trade Mark "Wolf amid". Preferably the dimer acid has substantially the structure of the substituted cyclohexene ring of dilinoleic acid. The nature of these polyamides is discussed in technical literature published in about 1971 by Cray Valley Products Ltd and entitled "CVP Polyamide Resins". A suitable commercial product to use is "Versamid" 930 and this is described in the literature just mentioned.

Preferably the polyamide has an amine value in the range 2—7 mg KOH/g, more preferably in the region of 3 mg KOH/g and an acid value in the range 2—7 mg KOH/g.

Preferably there is employed 80.5—98.9% by weight of the alkyd resin and 1—10% by weight of the polyamide both based on the total weight of (a), (b) and (c). More preferably there is employed 4—8% by weight of polyamide. The alkyd resin and the polyamide are co-reacted at a temperature in the range 180°—210°C, preferably by mixing and heating to a temperature in this range and holding at this temperature until the mixture will provide a clear film. This condition was confirmed by a test in which, when a sample of the resin was diluted to 60% solids by weight in white spirit, it remained clear when cooled to 25°C.

The polyisocyanate is used in a relatively low proportion and more preferably there is used only 2—5% by weight of the polyisocyanate. The polyisocyanate may be in monomeric or polymeric form. Preferably, and also for toxicological reasons, a polymeric form is used, for example the biuret from hexamethylene diisocyanate ("Desmodur" N) and the adduct of 1 mole trimethylol propane with 3 moles of tolylene diisocyanate, ("Desmodur" L). Preferably the polyisocyanate has a functionality of greater than 2, as is the case with the polymeric forms. However diisocyanates such as a mixture of the 2:4 and 2:6-tolylene diisocyanates may be employed.

The reaction with isocyanate groups of reactive groups, e.g. hydroxyl, or amino groups, present in the alkyd/polyamide prereaction product is carried out at an elevated temperature, e.g. at 100°C so that there does not remain any free isocyanate groups in the product. Preferably the proportion of isocyanate groups by weight used in relation to the hydroxyl groups present in the alkyd/polyamide is in the range 100:2.5—100:35. The final product is preferably diluted with aliphatic hydrocarbon to a solids content suitable for subsequent use for example in the formulation of coating compositions such as paints.

The resins provided by this invention are particularly suitable for the formation of thixotropic coating compositions notably paints which are to be used at elevated temperatures, for example in climates where the temperature may rise as high as 55°C. These compositions retain their thixotropic characteristics even over a cycle of continued temperature variation, e.g. over the range 10—60°C.

In the formulation of coating compositions which comprise a resin prepared according to the present invention the binder of the coating composition may comprise from 100—0.5% by weight of the resin of the invention and the resin may be blended with 0—99.5% by weight of an alkyd having Newtonian characteristics, or with any other suitable resin as binder or for example as a cross-linking agent.

Coating compositions according to the invention may also comprise pigment, extender, drier and organic solvent. A particularly suitable organic solvent is an aliphatic hydrocarbon but other organic liquids may also be present.

It is believed, but without restriction to this belief, that the advantageous rheological properties of the resins produced by the present process are due to the formation of certain polyureas and to the nature of the resin structure which results from the preferred selection of the reactants.

The invention is illustrated by the following Examples in which parts and percentages are by weight.

Example 1

An oil modified alkyd resin was prepared by condensing pentaerythritol (2.28 molar parts), isophthalic acid (1.63 molar parts) and tall oil fatty acids (3 molar parts) in a reaction vessel fitted with a stirrer, thermometer, nitrogen sparge and a Dean & Stark water separator. Xylol (3% by weight based on the initial charge) was added as water entraining solvent and the reaction mixture heated at 240°C until an acid value of 10—12 mg KOH/g was obtained. At this acid value, the resin had a viscosity of 30—35 poise when thinned to 75% solids in white spirit. The hydroxyl value of the resin was calculated to the 120 mg/KOH/g when taking the acid value to be zero.

1000 parts (at 96.8% solids by weight) of this resin was held at 190°C whilst adding 51 parts of a polyamide resin commercially available as "Versamid" 930. ("Versamid" is a Registered Trade Mark). Heating was continued until a sample of the resin diluted to 60% solids by weight in white spirit remained clear when cooled to 25°C in a water bath. This procedure required about 1 hour to achieve clarity.

The resin thus obtained was cooled to 100°C and 56.1 parts of 75% solids solution of a biuret isocyanate derived from hexamethylene diisocyanate of functionality greater than 2 and isocyanate content of 16.0%, (commercially available from Bayer as "Desmodur" N; ("Desmodur" N is a Registered Trade Mark), was added over a period of 1 hour. Heating was continued for a further 1 hour until the residual isocyanate content of the resin was zero. The resin was thinned to 62% solids by weight with white spirit. On cooling, the resin was strongly thixotropic and slightly hazy in appearance.

Example 2

This Example is similar to Example 1 but uses a different isocyanate.

A polyamide modified alkyd was prepared as in Example 1. 1000 parts of this resin were heated to 100°C and 168.5 parts of toluene diisocyanate (a 65/35 by weight mixture of the 2:4/2:6 isomers) was added over 1 hour. The resulting resin was held at 100°C until the residual isocyanate content was zero and was then thinned to 60% solids in white spirit. The product was a strongly thixotropic gel.

Example 3

In this Example the alkyd resin is prepared by the "monoglyceride process" and is based on phthalic anhydride.

An alkyd resin was prepared from pentaerythritol (2 molar parts), phthalic anhydride (2.25 molar parts) and soya bean oil (1 molar part) by the following procedure. The soya bean oil and 1 molar part of pentaerythritol were heated at 240°C for 1 hour together with 0.025% by weight (based on the charge) of litharge and 1% by weight (based on the charge) of xylol in an apparatus similar to that described in Example 1. After 1 hour, the completeness of the "monoglyceride" stage was checked and the charge cooled to 160°C. The phthalic anhydride, a further 1 molar part of pentaerythritol and sufficient xylol were added such that the condensation stage could be carried out at 240°C. When the acid value of the resin has fallen to 7—8 mg KOH/g and the hydroxy value was 143 mg KOH/g the resin was cooled to 190°C and "Versamid" 930 (7.5% by weight based on the non-volatile content of the resin) added over 15 minutes. Heating was continued at 190°C until a sample was clear when tested by the method described in Example 1. It was then cooled to 100°C and 47.7 parts of "Desmodur" N added over 1 hour. Heating was continued until the residual isocyanate content of the resin was zero, when it was thinned to 65% solids in white spirit. The resulting product was a clear thixotropic gel.

## Example 4

This Example is similar to Example 1 but uses a different isocyanate of functionality greater than 2.

1000 parts of the polyamide modified alkyd described in Example 3 was heated to 100°C in a suitable reaction vessel and 76.5 parts of "Desmodur" L (the reaction product of trimethylol propane and toluene diisocyanate, commercially available from Bayer and having an isocyanate content of 13.3%) were added over 1 hour. The reaction was continued until no free isocyanate remained in the resin after which it was thinned with white spirit to 65% solids. A firm slightly hazy thixotropic gel resulted.

## Example 5

This Example is similar to Example 3 but uses a different isocyanate.

1000 parts of the polyamide modified alkyd described in Example 3 were reacted with 67.3 parts of isophorone diisocyanate in the manner described in Example 3. A clear firm thixotropic gel resulted.

## Example 6

This Example is similar to Example 3 but uses a different isocyanate.

1000 parts of the polyamide-modified alkyd described in Example 3 were reacted with 63.3 parts of toluene diisocyanate (a 65/35 by weight mixture of 2:4/2:6 isomers) in the manner of Example 3. A clear firm thixotropic gel resulted.

## Example 7

In this Example the alkyd is based on phthalic anhydride and a blend of oils.

An oil modified alkyd resin derived from pentaerythritol (1.70 molar parts), phthalic anhydride (1.94 molar parts) and a 1:1 by weight blend of soya bean oil and 2 poise-viscosity bodies soya bean oil (1 molar part) was prepared by the method described in Example 3. The alkyd was condensed to an acid value of 10—15 mg KOH/g and a hydroxyl value of 130—135 mg KOH/g and was further modified by reaction with "Versamid" 930 (5% by weight based on the non-volatile content of the alkyd). 1000 parts of this alkyd resin was reacted at 100°C with 28g of "Desmodur" N added over 1 hour and held at 100°C until the residual isocyanate content was zero. It was then thinned to 63% by weight solids with white spirit. A slightly greasy thixotropic gel resulted.

## Example 8

An oil modified alkyd having an acid value of 10—12 mg KOH/g and a hydroxyl value of 123—125 mg KOH/g was prepared by the method of Example 1 but in which the isophthalic acid was replaced by an equimolar amount of adipic acid. The alkyd thus produced was further reacted with "Versamid" 930 and then "Desmodur" N as in Example 1. A resin having weak thixotropic properties resulted.

## Example 9

This Example illustrates the importance of the order of reacting the reactants (a), (b) and (c) according to the invention.

The preparation of the thixotropic resin described in Example 1 was repeated except that the order of reaction was changed. The initial alkyd was first reacted at 100°C with the "Desmodur" N until the isocyanate content was zero and the temperature of the product then raised to 190°C and reacted with "Versamid" 930. The resulting product when thinned to 62% by weight solids content with white spirit showed very low thixotropic properties compared with that resulting from the product of Example 1.

## Example 10

This Example illustrates the importance of the reaction with isocyanate.

The procedure of Example 1 was followed except that the final stage of reaction with isocyanate was omitted. The resulting product when thinned to 62% solids with white spirit was very much inferior in thixotropic properties to that obtained in Example 1.

## Example 11

In this Example there is assessed the heat stability of the thixotropic properties of the resins prepared in Examples 1—8.

Samples of the resins were diluted with white spirit to 50% solids and metallic driers were added (0.05% Co and 0.2% Ca metal by weight based on resin solids and added as the octoate salts). The samples were thoroughly mixed and allowed to equilibrate at 20°C for 16 hours in a water bath. The temperature of the bath was increased in 5°C steps and held at each temperature for 1 hour. The temperature at which the resin just melted was recorded. A sample of the resin derived from Example 9 and a commercially available conventional polyamide-modified alkyd were included as comparative standards.

| Resin | Example No. | | | | | | | | | Commercial Std. |
|---|---|---|---|---|---|---|---|---|---|---|
| | 1 | 2 | 3 | 4 | 5 | 6 | 7 | 8 | 9 | |
| Temp. of melting (°C) | 55—60 | 50—55 | 55—60 | 55—60 | 50—55 | 50—55 | 50—55 | 40—45 | 30—35 | 35—40 |

### Example 12

A full gloss thixotropic house paint was prepared as follows:

150 parts of rutile titanium dioxide (commercially available as "Rutiox" RCR6 from Tioxide Ltd., "Rutiox" is a Registered Trade Mark) were dispersed in 30 parts of a 75% solids solution in white spirit of a 69% oil length soya bean oil/pentaerythritol/phthalic acid alkyd if acid value 6—8 mg KOH/g and hydroxyl value 30—35 mg KOH/g and which has essentially Newtonian flow characteristics, and 40 parts of white spirit. The resulting millbase was diluted with a mixture of 36.7 parts of the alkyd solution having Newtonian flow characteristics and 188.2 parts of the thixotropic alkyd derived from Example 1. 0.8 part of a cobalt drier (containing 10% cobalt metal), 6.7 parts of calcium driers (containing 5% calcium metal), and 0.2 part of methyl ethyl ketoxime were added with stirring, and the paint thinned to 2.5 poise as measured on a cone and plate viscometer at 25° and 10,000 secs$^{-1}$. The thixotropic resin was premelted by heating to 65°C before adding it to the millbase.

The paint thus produced was equilibrated at 30°C for 24 hours and was applied to a primed substrate using a 1½ inch brush. A conventional non-drip gloss paint was treated in the same manner as a comparative standard. It was found that whereas the conventional non-drip gloss paint had poor brush loading properties, dripped badly and sagged badly from a vertical surface when applied in a thick coat, the paint of the invention showed good brushing properties, did not drip from the brush or sag from a vertical surface when applied in a thick coat.

A film applied with a 4 thou. block spreader to a glass panel dried at 30°C to give a tack-free film in 2.5 hours and was hard and tough after 6 hours. The gloss measured after 24 hours was found to be 95% at 45° on a commercially available gloss meter.

### Claims

1. A process of preparing a resin, suitable for use in an organic solvent-based coating composition which is to have thixotropic properties, which comprises reacting

(a) an alkyd resin having a hydroxyl value in the range 30—200 mg KOH/g and an acid value in the range 2—25 mg KOH/g and having been prepared by co-reacting a polyol, a polybasic acid and a co-reactive material comprising an unsaturated drying oil moiety, with

(b) a polyamide which has been obtained by coreacting a dimer acid and a polyalkylene polyamine,

and thereafter reacting the product of reacting (a) and (b) with

(c) 0.1—9.5% by weight based on the total weight of (a), (b) and (c) of a polyisocyanate, the relative weight proportions of hydroxyl:isocyanate groups in the product of reacting (a) & (b) and in the polyisocyanate (c) being in the range 100:5 to 100:50.

2. A process according to claim 1 wherein there is employed 2—5% by weight of a polyisocyanate.

3. A process according to claim 1 or claim 2 wherein the polyisocyanate has a functionality of greater than 2.

4. A process according to any one of claims 1—3 wherein the polyisocyanate is in a polymeric form.

5. A process according to claim 4 wherein the polymeric polyisocyanate is selected from a biuret derived from hexamethylene diisocyanate and the adduct of 1 mol of trimethylol propane with 3 mols of tolylene diisocyanate.

6. A process according to any one of claims 1 to 5 wherein there is employed 80.5—98.9% by weight of the alkyd resin (a) and 1—10% by weight of the polyamide (b), both based on the total weight of (a), (b) and (c).

7. A process according to any one of claims 1—6 wherein the hydroxyl value of the alkyd resin is in the range 75—150 mg KOH/g and the acid value of the alkyd resin is in the range 6—16.

8. A process according to any one of claims 1—7 wherein the polybasic acid used to prepare the alkyd resin comprises isophthalic acid.

9. A process according to any one of claims 1—8 wherein the co-reactive material comprising an unsaturated drying oil moiety is selected from drying oils, drying oil fatty acids and drying oil fatty acid partial esters of a polyol.

10. A resin when prepared by a process according to any one of claims 1 to 9.

11. A coating composition which may be thixotropic and which comprises as its binder 100—0.5% by weight, on the total binder, of a resin according to claim 10.

12. A coating composition according to claim 11 which comprises as its binder 0—99.5% of an alkyd resin having substantially Newtonian rheology.

13. A coating composition according to claim 11 or claim 12 which comprises aliphatic hydrocarbon as organic solvent.

### Revendications

1. Procédé de préparation d'une résine se prêtant à l'utilisation dans une composition de revêtement à base de solvant organique qui doit avoir des propriétés thixotropiques, qui comprend la réaction

(a) d'une résine alkyde qui a un indice d'hydroxyle de l'intervalle de 30—200 mg KOH/g et un indice d'acide de l'intervalle de 2—25 mg KOH/g et qui a été préparée par coréaction d'un polyol, d'un acide polybasique et d'une matière coréactive comprenant une entité d'huile siccative insaturée, avec

(b) un polamide qui a été obtenu par coréaction d'un acide dimère et d'une polyalcoylène-polyamine, et ensuite la réaction du produit de réaction (a) et (b) avec

(c) 0,1—9,5% en poids, sur base du poids total de (a), (b) et (c), d'un polyisocyanate, les proportions pondérales relatives radicaux hydroxyle:radicaux isocyanate dans le produit de réaction de (a) et (b) et dans la polyisocyanate (c), respectivement, se situant dans l'intervalle de 100:5—100:50.

2. Procédé suivant la revendication 1, dans lequel on utilise 2—5% en poids d'un polyisocyanate.

3. Procédé suivant la revendication 1 ou 2, dans lequel le polyisocyanate a une fonctionnalité supérieure à 2.

4. Procédé suivant l'une quelconque des revendications 1—3, dans lequel le polyisocyanate se trouve sous une forme polymère.

5. Procédé suivant la revendication 4, dans lequel le polyisocyanate polymère est choisi entre un biuret issu du diisocyanatohexane et le produit d'addition de 1 mole de triméthylolpropane avec 3 moles de diisocyanatotoluène.

6. Procédé suivant l'une quelconque des revendications 1 à 5, dans lequel on utilise 80,5—98,9% en poids de la résine alkyde (a) et 1—10% en poids du polyamide (b), tous deux sur base du poids total de (a), (b) et (c).

7. Procédé suivant l'une quelconque des revendications 1—6, dans lequel l'indice d'hydroxyle de la résine alkyde se situe dans l'intervalle de 75—150 mg KOH/g et l'indice d'acide de la résine alkyde se situe dans l'intervalle de 6—16 mg KOH/g.

8. Procédé suivant l'une quelconque des revendications 1—7, dans lequel l'acide polybasique utilisé pour préparer la résine alkyde comprend de l'acide isophtalique.

9. Procédé suivant l'une quelconque des revendications 1—8, dans lequel la matière coréactive comprenant une entité d'huile siccative insaturée est choisie parmi les huiles siccatives, les acides gras d'huiles siccatives et les esters partiels d'acides gras d'huiles siccatives et d'un polyol.

10. Résine, préparée par un procédé suivant l'une quelconque des revendications 1 à 9.

11. Composition de revêtement qui peut être thixotropique et qui comprend comme liant 100—0,5% en poids, sur base du liant complet, d'une résine suivant la revendication 10.

12. Composition de revêtement suivant la revendication 11, qui comprend comme liant 0—99,5% d'une résine alkyde ayant une rhéologie sensiblement newtonienne.

13. Composition de revêtement suivant la revendication 11 ou la revendication 12, qui comprend un hydrocarbure aliphatique comme solvant organique.


**Patentansprüche**

1. Verfahren zur Herstellung eines Harzes, das sich für die Verwendung in einer auf einem organischen Lösungsmittel basierenden Beschichtungszusammensetzung eignet, die thixotrope Eigenschaften besitzen soll, bei welchem

(a) ein Alkydharz, das einen Hydroxylwert im Bereich von 30—200 mg KOH/g und einen Säurewert im Bereich von 2—25 mg KOH/g aufweist und durch gemeinsame Umsetzung eines Polyols, einer mehr-basigen Säure und einem damit reaktionsfähigen, die Gruppierung eines ungesättigten trocknenden Öls aufweisenden Materials hergestellt worden ist, mit

(b) einem Polyamid, das durch gemeinsame Umsetzung einer Dimersäure und eines Polyalkylenpolyamins erhalten worden ist, umgesetzt wird und hierauf das Produkt der Umsetzung von (a) und (b) mit

(c) 0,1—9,5 Gew.%, bezogen auf des Gesamtgewicht aus (a), (b) und (c), eines Polyisocyanats umgesetzt wird, wobei das Gewichtsverhältnis von Hydroxylgruppen: Isocyanatgruppen im Produkt der Umsetzung von (a) und (b) und im Polyisocyanat (c) im Bereich von 100:5 bis 100:50 liegt.

2. Verfahren nach Anspruch 1, bei welchem 2—5 Gew.% eines Polyisocyanats verwendet werden.

3. Verfahren nach Anspruch 1 oder 2, bei welchem das Polyisocyanat eine größere Funktionalität als 2 aufweist.

4. Verfahren nach einem der Ansprüche 1 bis 3, bei welchem das Polyisocyanat eine polymere Form aufweist.

5. Verfahren nach Anspruch 4, bei welchem das polymere Polyisocyanat aus einem sich von Hexamethylendiisocyanat ableitenden Biuret und dem Addukt aus 1 Mol Trimethylolpropan mit 3 Mol Tolylendiisocyanat ausgewählt wird.

6. Verfahren nach einem der Ansprüche 1 bis 5, bei welchem 80,5—98,9 Gew.% des Alkydharzes (a) und 1—10 Gew.% des Polyamids (b) verwendet werden, beide bezogen auf das Gesamtgeweicht aus (a), (b) und (c).

7. Verfahren nach einem der Ansprüche 1 bis 6, bei welchem der Hydroxylwert des Alkydharzes im Bereich von 75—150 mg KOH/g und der Säurewert des Alkydharzes im Bereich von 6—16 mg KOH/g liegt.

8. Verfahren nach einem der Ansprüche 1 bis 7, bei welchem die zur Herstellung des Alkydharzes verwendete mehrbasige Säure Isophthalsäure umfaßt.

9. Verfahren nach einem der Ansprüche 1 bis 8, bei welchem das die Gruppierung eines ungesättigten trocknenden Öls aufweisende, reaktionsfähige Material aus trocknenden Ölen, Fettsäuren von trocknenden Ölen und Teilestern aus Fettsäuren von trocknenden Ölen und einem Polyol ausgewählt wird.

10. Harz, welches nach einem der Ansprüche 1 bis 9 hergestellt worden ist.

11. Beschichtungszusammensetzung, die thixotrop sein kann und die als Binder 100—0,5 Gew.%, bezogen auf den gesamten Binder, eines Harzes nach Anspruch 10 enthält.

12. Beschichtungszusammensetzung nach Anspruch 11, welche als Binder 0—99,5% eines Alkydharzes mit im wesentlichen Newtonscher Rheologie enthält.

13. Beschichtungszusammensetzung nach Anspruch 11 oder 12, welche als Lösungsmittel einen aliphatischen Kohlenwasserstoff enthält.